# EUROPEAN PATENT APPLICATION

(11) **EP 3 096 531 A1**
(43) Date of publication of application: **23.11.2016**
(21) Application number: 15818574.4
(22) Date of filing: 07.07.2015
(51) Int. Cl.: H04N 21/436, H04N 21/472, H04N 21/426, H04N 5/765

(54) **ONE-SCREEN SHARING METHOD, APPARATUS, AND SYSTEM**

(30) Priority: 07.07.2014 CN 201410319777
(71) Applicant: LE Holdings (Beijing) Co., Ltd., Beijing 100025 (CN); Le Shi Zhi Xin Electronic Technology (Tianjin) Limited, Tianjin 300450 (CN)
(72) Inventor: ZHANG, Guohua, Beijing 100025 (CN); LIU, Song, Beijing 100025 (CN)
(74) Representative: Manitz, Finsterwald & Partner GbR
(86) International application number: PCT/CN2015/083471
(87) International publication number: WO 2016/004857

(57) **Abstract**

An embodiment of the present disclosure discloses a smart terminal one-screen sharing method, device and system, including a multimedia equipment transmitting terminal and a multimedia equipment receiving terminal, wherein the transmitting terminal includes a first WiHD chip having a transmitting function, and the receiving terminal includes a second WiHD chip having a receiving function, on the multimedia equipment transmitting terminal, the method includes the following steps: obtaining image data of a display interface of the multimedia equipment transmitting terminal when an instruction of sharing the display interface to the multimedia equipment receiving terminal is received; sending a request of establishing a connection through the first WiHD chip to the second WiHD chip to establish a communication connection based on the WiHD chips between the two terminals; and transmitting the image data to the multimedia equipment receiving terminal through the communication connection, to realize one-screen sharing between the two terminals. With the one-screen sharing method, device and system, pre-setting any one-screen sharing application is free, the operations are simple and no delay occurs in data transmission, greatly improving user viewing experience.

## Description

### TECHNICAL FIELD

The present disclosure generally relates to multimedia technology, in particular to a one-screen sharing method, device and system.

### BACKGROUND

The popularization of electronic equipment such as smart phones, tablets and smart TV in modem families has brought increasingly more use of one-screen sharing technology. In the existing one-screen sharing technology, first the multimedia equipment transmitting terminal is connected with the multimedia equipment receiving terminal through a WIFI (Wireless Fidelity) network, and by invoking preset one-screen sharing application (such as AirPlayer, Wireless Display, etc.), multimedia data such as audio, video, picture, etc. selected in the multimedia equipment transmitting terminal are compressed and modulated, and are then sent to the multimedia equipment receiving terminal supporting this same one-screen application through the WIFI network. The multimedia equipment receiving terminal decompresses, demodulates and displays multimedia data after receiving the multimedia data, such that multimedia documents in the multimedia equipment transmitting terminal (such as a mobile phone, a tablet computer and the like) can be pushed onto large-screen extended playing equipment (a multimedia equipment receiving terminal) such as a smart TV, a projector and the like, and therefore the multimedia documents in the mobile phone or the tablet computer can be viewed on the large-screen extended playing equipment, so as to achieve a better viewing effect and improve user's visual experience.

However, the above existing one-screen sharing technology at least has the following problems that:

First, as the multimedia equipment transmitting terminal and the multimedia equipment receiving terminal are connected through the WIFI network, the data transmission between the multimedia equipment transmitting terminal and the multimedia equipment receiving terminal is prone to be affected by bandwidth, network delay and like factors so as to result in jam, stop and like phenomena during the data transmission. Jam, stop, time delay and like phenomena occur easily in particular when video or audio documents that are being played on the multimedia equipment transmitting terminal are pushed onto the multimedia equipment receiving terminal to realize one-screen sharing for example, and therefore user's viewing experience is influenced.;

Second, the one-screen sharing application that is preset in the multimedia equipment transmitting terminal may also witness software failure, time delay and like phenomena during the compression and pushing of the multimedia data, so that the synchronization for the multimedia equipment receiving terminal to receive data will also be affected, and therefore user's viewing experience will also be influenced.

Thus, the user experience of the existing one-screen sharing technology is less than ideal.

### SUMMARY

The technical problem to be solved by the present disclosure is to provide a method, device and system for one-screen sharing, which can solve the problem that the viewing experience of the existing one-screen sharing technology is less than ideal. The method, device and system for one-screen sharing does not need to be preset with one-screen sharing application, and has simple operating process, and no-delay in data transmission, which makes the one-screen sharing process more stable, largely improving user viewing experience.

In order to solve the above problems, in one aspect, the present disclosure provides a one-screen sharing method, wherein a multimedia equipment transmitting terminal and a multimedia equipment receiving terminal are included, the multimedia equipment transmitting terminal includes a first wireless high-definition (WiHD) chip having a transmitting function, and the multimedia equipment receiving terminal includes a second WiHD chip having a receiving function.

On the multimedia equipment transmitting terminal, the one-screen sharing method includes the following steps:
obtaining the image data of a display interface when an instruction of sharing the display interface of the multimedia equipment transmitting terminal to the multimedia equipment receiving terminal is received;
sending a request of establishing a connection to the second WiHD chip through the first WiHD chip to establish a communication connection based on the WiHD chips between the multimedia equipment transmitting terminal and the multimedia equipment receiving terminal; and
transmitting the image data to the multimedia equipment receiving terminal through the communication connection based on the WiHD chips, so that the multimedia equipment receiving terminal displays synchronously according to the received image data to realize one-screen sharing between the multimedia equipment transmitting terminal and the multimedia equipment receiving terminal.

Preferably, the communication protocol of the first WiHD chip is the same as that of the second WiHD chip.

Preferably, the step of obtaining the image data of the display interface is specifically to obtain the image data of the display interface in real time.

Preferably, the one-screen sharing method further includes the following steps:
determining whether audio data is included in a file corresponding to the display interface; and
if yes, extracting the audio data in real time and transmitting the audio data to the multimedia equipment receiving terminal through the communication connection based on the WiHD chips, so that the multimedia equipment receiving terminal plays synchronously according to the received audio data.

Preferably, the first WiHD chip is built in the multimedia equipment transmitting terminal; or the multimedia equipment transmitting terminal is provided with a first mobile high-definition link (MHL), the first WiHD chip is provided in a transmitter including a second MHL, and the first MHL and the second MHL are connected by a first preset data line to realize a connection between the transmitter and the multimedia equipment transmitting terminal.

In addition, the present disclosure further provides a one-screen sharing method, wherein a multimedia equipment transmitting terminal and a multimedia equipment receiving terminal are included, the multimedia equipment transmitting terminal includes a first WiHD chip having a transmitting function, the multimedia equipment receiving terminal includes a second WiHD chip having a receiving function, and the multimedia equipment receiving terminal is provided with a first high definition multimedia interface (HDMI),
on the multimedia equipment receiving terminal, the method includes the following steps:
receiving a request of establishing a connection transmitted from the first WiHD chip through the second WiHD chip to establish a communication connection based on the WiHD chips between the multimedia equipment transmitting terminal and the multimedia equipment receiving terminal;
switching an input source of the multimedia equipment receiving terminal to the first HDMI; and
receiving image data transmitted from the multimedia equipment transmitting terminal through the communication connection based on the WiHD chips, and displaying synchronously, to realize one-screen sharing between the multimedia equipment transmitting terminal and the multimedia equipment receiving terminal.

Preferably, the one-screen sharing method further includes the following step:
receiving audio data transmitted from the multimedia equipment transmitting terminal through the communication connection based on the WiHD chips, and playing synchronously.

Preferably, the step that the input source of the multimedia equipment receiving terminal is set as the first HDMI includes the following step:
setting the input source of the multimedia equipment receiving terminal as the first HDMI when a request of setting the input source of the multimedia equipment receiving terminal is received.

Preferably, the second WiHD chip is built in the multimedia equipment receiving terminal; or the second WiHD chip is provided in a receiver including a second HDMI, the second HDMI and the first HDMI are connected by a second preset data line to realize a connection between the receiver and the multimedia equipment receiving terminal.

In another aspect, the present disclosure further provides a one-screen sharing device, wherein a multimedia equipment transmitting terminal and a multimedia equipment receiving terminal are included, the multimedia equipment transmitting terminal includes a first WiHD chip having a transmitting function, the multimedia equipment receiving terminal includes a second WiHD chip having a receiving function,
on the multimedia equipment transmitting terminal side, the one-screen sharing device includes:
an obtaining module, which is configured to obtain image data of a display interface when an instruction of sharing the display interface of the multimedia equipment transmitting terminal to the multimedia equipment receiving terminal is received;
a connection request module, which is configured to send a request of establishing a connection to the second WiHD chip through the first WiHD chip to establish a communication connection based on the WiHD chips between the multimedia equipment transmitting terminal and the multimedia equipment receiving terminal; and
a transmitting module, which is configured to transmit the image data to the multimedia equipment receiving terminal through the communication connection based on the WiHD chips, so that the multimedia equipment receiving terminal displays synchronously according to the received image data to realize one-screen sharing between the multimedia equipment transmitting terminal and the multimedia equipment receiving terminal.

In addition, the present disclosure further provides a one-screen sharing device, wherein a multimedia equipment transmitting terminal and a multimedia equipment receiving terminal are included, the multimedia equipment transmitting terminal includes a first WiHD chip having a transmitting function, the multimedia equipment receiving terminal includes a second WiHD chip having a receiving function, and the multimedia equipment receiving terminal is provided with a first HDMI,
on the multimedia equipment receiving terminal side, the one-screen sharing device incudes:
a first receiving module, which is configured to receive a request of establishing a connection sent by the first WiHD chip through the second WiHD chip to establish a communication connection based on the WiHD chips between the multimedia equipment transmitting terminal and the multimedia equipment receiving terminal;
a switching module, which is configured to switch an input source of the multimedia equipment receiving terminal to the first HDMI; and
a second receiving module, which is configured to receive image data transmitted from the multimedia equipment transmitting terminal through the communication connection based on the WiHD chips, and display synchronously, to realize one-screen sharing between the multimedia equipment transmitting terminal and the multimedia equipment receiving terminal.

Meanwhile, the present disclosure also provides a one-screen sharing system, wherein a multimedia equipment transmitting terminal and a multimedia equipment receiving terminal are included, the multimedia equipment transmitting terminal includes a first WiHD chip having a transmitting function and a first data processor, the first WiHD chip and the first data processor are in communication connection;
the multimedia equipment transmitting terminal includes a second WiHD chip having a receiving function and a second data processor, and the second WiHD chip and the second data processor are in communication connection; and
wherein when the multimedia equipment transmitting terminal receives an instruction of sharing a display interface to the multimedia equipment receiving terminal, an obtaining module in the first data processor obtains image data of the display interface, once a connection request module in the first data processor sends a request of establishing a communication connection based on the first WiHD chip and the second WiHD chip to a first receiving module in the second processor and the communication connection is established, a transmitting module in the first data processor transmits the image data to the multimedia equipment receiving terminal, and a second receiving module 44 in a second processing module receives the image data transmitted from the multimedia equipment transmitting terminal, and displays synchronously.

Preferably, the multimedia equipment receiving terminal further includes a first HDMI, and the second data processor and the first HDMI are in communication connection; and
the second processing module further includes:
a switching module, which is configured to switch an input source of the multimedia equipment receiving terminal to the first HDMI to receive the image data transmitted from the multimedia equipment transmitting terminal through the first HDMI, and display synchronously.

In addition, the present disclosure also provides a computer readable recording medium recorded with a program for executing the above method thereon.

Comparing with the prior art, one of above technical solutions has the following advantages that:
According to the one-screen sharing method, device and system provided by the embodiments of the present disclosure, a multimedia equipment transmitting terminal is provided with a wireless high-definition (WiHD) chip having a transmitting function and a multimedia equipment receiving terminal is provided with a WiHD chip having a receiving function, to realize a communication connection based on the WiHD chips between the multimedia equipment transmitting terminal and the multimedia equipment receiving terminal. By obtaining the image of the display interface of the multimedia equipment transmitting terminal and transmitting it to the multimedia equipment receiving terminal through the above communication connection, the multimedia equipment receiving terminal displays synchronously the contents displayed on the multimedia equipment transmitting terminal. As thus, one-screen sharing between the multimedia equipment transmitting terminal and the multimedia equipment receiving terminal is realized without installing any one-screen sharing application. The operations of this method are simple, which can make users operate more efficiently. Furthermore, since the communication connection between the multimedia equipment transmitting terminal and the multimedia equipment receiving terminal is based on the WiHD chips, the data transmission rate and transmission quality are higher and the transmission process is more stable, so that there is no delay in the one-screen sharing process, the image quality is good and more stable, and the user viewing experience can be improved. In addition, in cases where an audio or video file is being played on the multimedia equipment transmitting terminal, the audio data can also be extracted in real time and transmitted to the multimedia equipment receiving terminal to be played by the multimedia equipment receiving terminal, thus further improving user listening experience.

### BRIEF DESCRIPTION OF THE DRAWINGS

FIG. 1 is a schematic flowchart illustrating a first embodiment of the one-screen sharing method according to the present disclosure;
FIG. 2 is a schematic diagram of the display interface of the multimedia equipment transmitting terminal in the first embodiment of the one-screen sharing method according to the present disclosure;
FIG. 3 is a schematic flowchart illustrating a second embodiment of the one-screen sharing method according to the present disclosure;
FIG. 4 is a schematic diagram illustrating the display interface of the multimedia equipment receiving terminal in the second embodiment of the one-screen sharing method according to the present disclosure;
FIG. 5 is a structural schematic diagram illustrating a first embodiment of the one-screen sharing device according to the present disclosure;
FIG. 6 is a structural schematic diagram illustrating the first embodiment of the one-screen sharing device according to the present disclosure; and
FIG. 7 is a structural schematic diagram illustrating a first embodiment of the one-screen sharing system according to the present disclosure.

### DESCRIPTION OF THE EMBODIMENTS

Hereinafter, to make the above purposes, features and advantages of the present disclosure more obvious and easy to understand, the application will be further described in detail below in conjunction with the accompanying drawings and particular embodiments.

First, the conceptions related to the application will be described briefly.

WirelessHD (WiHD) technology is a wireless high-speed technology that is highly desired by users. It mainly employs spectrum in the frequency band of 60GHz (MMW; millimeter wave), which can acquire higher data transmission rate and the initial transmission rate is as high as 4Gbps. Thereby, the bandwidth necessary for transmitting high quality, high definition and non-compressed videos can be provided more reliably.

Mobile high-definition link (MHL) is a video standard interface connecting a portable consumption electronic device, and the MHL can present on HD TV through standard HDMI by only one signal cable. It uses existing Micro USB interface, enabling mobile phone, digital camera, digital video camera and portable multimedia player to directly transmit complete media contents to TVs without affecting high resolution of video.

High Definition Multimedia Interface (HDMI) is a digital video/audio interface technology, which is a dedicated digital interface applying to video transmission, and can transmit audio and video signals simultaneously without digital/analog or analog/digital conversion before the transmission, and the data transmission rate is as high as 5Gbps. HDMI can also be used in combination with High-bandwidth Digital-content Copy Protection (HDCP) to protect copyright video and audio contents from being copied in an unauthorized way.

The main executive bodies related in the embodiments of the present disclosure include the multimedia equipment transmitting terminal which may include a mobile phones, tablet PCs and the like and the multimedia equipment receiving terminal which may be large screen extending playback equipment such as smart TVs, projectors and the like.

The multimedia equipment transmitting terminal includes a first wireless high-definition (WiHD) chip having a transmitting function, the multimedia equipment receiving terminal includes a second wireless high-definition chip having a receiving function, the wireless high-definition chip is a WiHD chip that supports a wireless high-definition video transport protocol, and the communication protocol of the first WiHD chip is the same as that of the second WiHD chip.

Wherein the first wireless high-definition chip (the first WiHD chip) can be provided in the following ways that: for example, it is built in the multimedia equipment transmitting terminal; or the multimedia equipment transmitting terminal is provided with a first MHL, the first WiHD chip is provided in a transmitter which includes a second MHL, and the first MHL and the second MHL are connected by a first preset data line to realize a connection between the transmitter and the multimedia equipment transmitting terminal.

The second wireless high-definition chip (the second WiHD chip) can be provided in the following way that: it is built in the multimedia equipment receiving terminal; or the multimedia equipment receiving terminal is provided with a first HDML, the second WiHD chip is provided in a receiver which includes a second HDML, and the first HDML and the second HDML are connected by a second preset data line to realize a connection between the receiver and the multimedia equipment receiving terminal.

In the specific implementation process, the multimedia equipment transmitting terminal and the multimedia equipment receiving terminal are separated from but also related to each other and realize the technical solution provided by the embodiments of the present disclosure together. For description, the embodiments of the present disclosure will be described respectively from the perspective of the multimedia equipment transmitting terminal and the perspective of the multimedia equipment receiving terminal hereinafter.

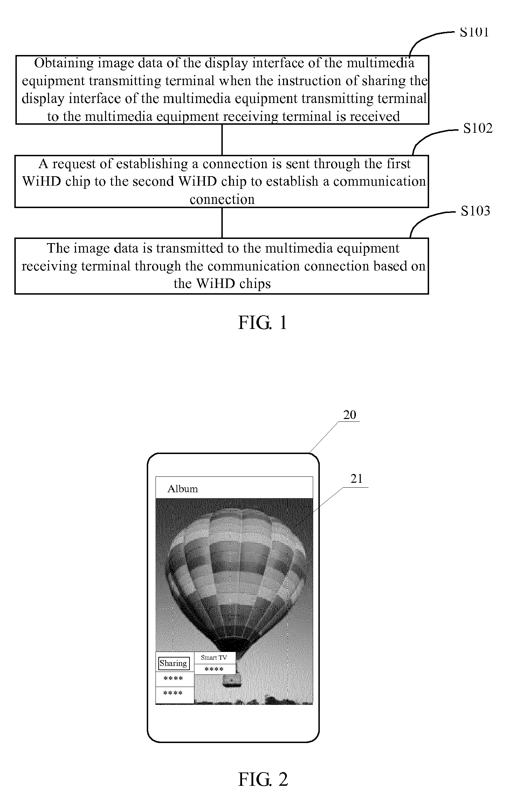

Referring to FIG. 1, it shows a schematic flowchart illustrating a first embodiment of the one-screen sharing method of the present disclosure. In this embodiment, on the multimedia equipment transmitting terminal, the method includes the following steps:
S101, obtaining image data of the display interface of the multimedia equipment transmitting terminal when the instruction of sharing the display interface of the multimedia equipment transmitting terminal to the multimedia equipment receiving terminal is received.

In this embodiment, the multimedia equipment transmitting terminal may be a smart phone provided with the first WiHD chip. Wherein, when the instruction of sharing the display interface of the multimedia equipment transmitting terminal to the multimedia equipment receiving terminal is executable, for example, when a user at home wants to share the display interface of the mobile phone to the smart TV for viewing, the user at home can find and trigger the option (or key) of "Share" in the preset menu of the mobile phone, and then select the target for sharing, for example, a smart TV.

The display interface of the multimedia equipment transmitting terminal may include a static interface (e.g., a homepage after turning on, a certain picture being viewed in the preset album application and the like) and a dynamic interface (e.g., an interface playing video or audio files, a game interface and the like).

Therefore, a step of determining whether the display interface is a static interface can also be included after the instruction of sharing the display interface of the multimedia equipment transmitting terminal to the multimedia equipment receiving terminal is received. Whether the display interface is a static interface or a dynamic interface can be determined according to the property (e.g., name) of the application corresponding to the current display interface. Taking a mobile phone as an example, the current display interface is a picture, the application corresponding to the picture is "Album", and thus it can be known according to the property of the album that the display interface is a static interface; and another example: the current display interface is playing a video, the application corresponding to the video is "StormPlayer", and thus it can be known according to the property of the StormPlayer that the display interface is a dynamic interface.

If the determination result is yes, i.e., the display interface of the multimedia equipment transmitting terminal is a static interface, then the image data of the display interface need to be obtained only once, which means it is enough to obtain the image data of the current display interface in order to reduce the waste of the internal storage resource.

If the determination result is no, i.e., the display interface of the multimedia equipment transmitting terminal is a dynamic interface, then the image data of the display interface need to be obtained in real time. It can be obtained at a real-time frequency of 60 frames or 30 frames per second, so that the image of the display interface of the multimedia equipment transmitting terminal can be displayed on the multimedia equipment receiving terminal in a more synchronous way.

When the multimedia equipment transmitting terminal is playing an audio or video file, the sound can be played by the multimedia equipment transmitting terminal, but the audio data of the audio or video file can also be extracted, and is transmitted to the multimedia equipment receiving terminal through the communication connection based on the WiHD chips, to be played by the multimedia equipment receiving terminal in a synchronous way.

Therefore, determining whether the file corresponding to the display interface includes audio data can also be included, finding the file corresponding to the display interface in the application corresponding to the display interface determined in the above step, and then determining whether the file includes audio data. For example, the current display interface is playing a video, and the application corresponding to the video is "StormPlay". It can be determined that the video file includes audio data according to the fact that the video file can be found in the StormPlay. After that, the audio data can be extracted in real time, so that the audio data can be transmitted to the multimedia equipment receiving terminal and be displayed by the multimedia equipment receiving terminal synchronously.

S102, a request of establishing a connection is sent through the first WiHD chip to the second WiHD chip to establish a communication connection based on the WiHD chips between the multimedia equipment transmitting terminal and the multimedia equipment receiving terminal.

When the request of establishing a connection is sent through the first WiHD chip to the second WiHD chip, the multimedia equipment receiving terminal receives the connection request and displays it. Once the connection request is received by the multimedia equipment receiving terminal, the communication connection based on the WiHD chips can be realized between the multimedia equipment transmitting terminal and the multimedia equipment receiving terminal.

S103, the image data is transmitted to the multimedia equipment receiving terminal through the communication connection based on the WiHD chips, so that the multimedia equipment receiving terminal displays synchronously according to the received image data to realize one-screen sharing between the multimedia equipment transmitting terminal and the multimedia equipment receiving terminal.

Furthermore, the audio data extracted in S101 can also be transmitted to the multimedia equipment receiving terminal through the communication connection based on the WiHD chips, so that the multimedia equipment receiving terminal displays synchronously according to the received audio data.

FIG. 2 is a schematic diagram illustrating the display interface of the multimedia equipment transmitting terminal in the first embodiment of the one-screen sharing method of the present disclosure. The above steps will be further described in reference with Figure 2, taking the multimedia equipment transmitting terminal as a mobile phone, and the multimedia equipment receiving terminal is as a smart TV.

### Example 1:

When viewing a certain picture in a mobile phone 20 by the mobile phone and wanting to share the picture to a smart TV in the house for viewing, the users can find and trigger "Share" in the preset menu of the mobile phone 20, and then select to share to "Smart TV" (as shown in FIG. 2).

When the mobile phone 20 receives the above operations, the display interface 21 of the phone is a static interface or a dynamic interface is determined. Since the application corresponding to the picture viewed is "Album", it can be known that the display interface is a static interface when the picture is being viewed according to the property of the album, and the image data of the display interface needs to be obtained only once.

A request of establishing a connection is sent through the first WiHD chip to the second WiHD chip. Once the connection request is received by the smart TV, a communication connection based on the WiHD chips can be realized between the mobile phone and the smart TV

The mobile phone sends the image of the display interface to the smart TV through the communication connection based on the WiHD chips, so that the smart TV displays the display interface of the mobile phone synchronously according to the received image data to realize one-screen sharing between the mobile phone and the smart TV

### Example 2:

When watching a certain video file in a mobile phone by the mobile phone and wanting to share the video file to a smart TV in the house for watching, then the users can find and trigger "Share" in the preset menu of the mobile phone, and then select to share to "Smart TV".

When the mobile phone receives the above operations, the display interface is a static interface or a dynamic interface is determined. Since the application corresponding to the interface playing the video is "StormPlay", it can be known that the display interface is a dynamic interface when the video is being played according to the property of the "StormPlay", and the image data of the display interface needs to be obtained in real time.

According to the application (StormPlay) corresponding to the display interface determined in the above step, the file (e.g., "the first episode of the Legend of Zhen Huan") corresponding to the display interface is found in the application, and then it can be determined that the file includes audio data, and the audio data in the file is extracted in real time.

A request of establishing a connection is sent through the first WiHD chip to the second WiHD chip. Once the connection request is received by the multimedia equipment receiving terminal, a communication connection based on the WiHD chips is realized between the multimedia equipment transmitting terminal and the multimedia equipment receiving terminal.

The obtained image data of the display interface and the extracted audio data are transmitted to the multimedia equipment receiving terminal through the communication connection based on the WiHD chips, so that the multimedia equipment receiving terminal plays the video file synchronously according to the received image data and audio data to realize one-screen sharing between the multimedia equipment transmitting terminal and the multimedia equipment receiving terminal.

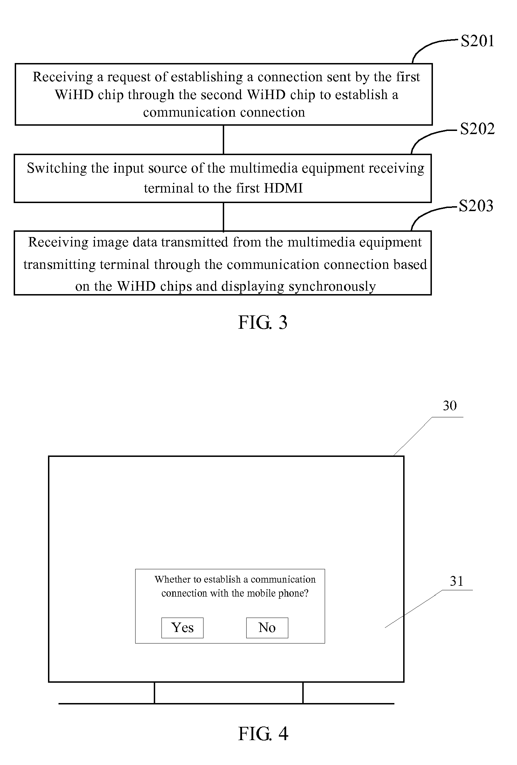

The present disclosure also provides a one-screen sharing method on the multimedia equipment receiving terminal side. Referring to FIG. 3, it is a schematic flowchart of a second embodiment of the one-screen sharing method.

This embodiment includes a multimedia equipment transmitting terminal and a multimedia equipment receiving terminal, the multimedia equipment transmitting terminal includes a first WiHD chip having a transmitting function, the multimedia equipment receiving terminal includes a second WiHD chip having a receiving function, and the multimedia equipment receiving terminal is provided with a first HDMI.

On the multimedia equipment receiving terminal side, the method includes the following steps:
S201, receiving a request of establishing a connection sent by the first WiHD chip through the second WiHD chip to establish a communication connection based on the WiHD chips between the multimedia equipment transmitting terminal and the multimedia equipment receiving terminal.

In particular, the multimedia equipment receiving terminal receives and displays the request for of establishing the communication connection sent by the multimedia equipment transmitting terminal. Once the connection request is received by the multimedia equipment receiving terminal, the communication connection can be established by the WiHD chips between the multimedia equipment transmitting terminal and the multimedia equipment receiving terminal.

S202, switching the input source of the multimedia equipment receiving terminal to the first HDMI, so that data transmitted from the multimedia equipment transmitting terminal is received through the HDMI.

Based on the requirements of design, the switching operation can be conducted after S201, i.e., once the second WiHD chip receives the request for of establishing a connection sent by the first WiHD chip, the input source is switched in a default way; or when the request of setting the input source of the multimedia equipment receiving terminal is received, for example, the user triggers the option in a certain preset menu to have a dialog box for switching the input source displayed on the interface of the multimedia equipment receiving terminal and sets the input source of the multimedia equipment receiving terminal as the first HDMI according to the prompt in the dialog box.

S203, receiving image data transmitted from the multimedia equipment transmitting terminal through the communication connection based on the WiHD chips and displaying synchronously, to realize one-screen sharing between the multimedia equipment transmitting terminal and the multimedia equipment receiving terminal.

Further, the method may also include the following step: receiving, through the communication connection based on the WiHD chips, audio data transmitted from the multimedia equipment transmitting terminal and playing synchronously, so that when a video or audio file is shared one screen, the audio is played synchronously by the multimedia equipment receiving terminal, improving the user listening experience.

FIG. 4 is a schematic diagram illustrating the display interface of the multimedia equipment receiving terminal in the second embodiment of the one-screen sharing method of the present disclosure. Hereinafter, the above steps will be further described in reference with FIG. 4, taking the multimedia equipment transmitting terminal as a mobile phone and the multimedia equipment receiving terminal as a smart TV.

### Example 3 (based on Example 2)

The smart TV 30 receives, through the second WiHD chip, the request of establishing a connection sent by the first WiHD chip in the mobile phone 20 and displays the request on the interface 31 of the smart TV 30 (as shown in FIG. 4). The request may include "whether to establish a communication connection with the mobile phone?", "Yes", "No" and the like. If the user of the TV triggers the key of "Yes", it means receiving establishing a communication connection based on the WiHD chips with the mobile phone.

After establishing the above communication, the smart TV system automatically switches the input source to the first HDMI in a default way.

Image data transmitted from the mobile phone is received through the above communication connection based on the WiHD chips so that the picture being viewed on the mobile phone is displayed synchronously on the TV.

In the embodiments of the one-screen sharing method provided by the present disclosure, the multimedia equipment transmitting terminal is provided with a WiHD chip having a transmitting function and the multimedia equipment receiving terminal is provided with a WiHD chip having a receiving function, to realize the communication connection based on the WiHD chips between the multimedia equipment transmitting terminal and the multimedia equipment receiving terminal. By obtaining the image of the display interface of the multimedia equipment transmitting terminal and transmitting it to the multimedia equipment receiving terminal through the above communication connection, the multimedia equipment receiving terminal can synchronously display the contents displayed on the multimedia equipment transmitting terminal. As thus, one-screen sharing between the multimedia equipment transmitting terminal and the multimedia equipment receiving terminal is realized without installing any one-screen sharing application. The operations of this method are simple, which makes users operate more efficiently. Furthermore, since the communication connection between the multimedia equipment transmitting terminal and the multimedia equipment receiving terminal is based on the WiHD chips, the data transmission rate and transmission quality are higher and the transmission process is more stable, so that there is no delay in the one-screen sharing process, the image quality is good and more stable, and user viewing experience can be improved. In addition, in cases where an audio or video file is being played on the multimedia equipment transmitting terminal, the audio data can also be extracted in real time and transmitted to the multimedia equipment receiving terminal to be played by the multimedia equipment receiving terminal, thus further improving user listening experience.

Embodiments of the one-screen sharing device are also provided, corresponding to the above embodiments of the one-screen sharing method of the present disclosure. A detailed description will be given with reference to the accompanying drawings.

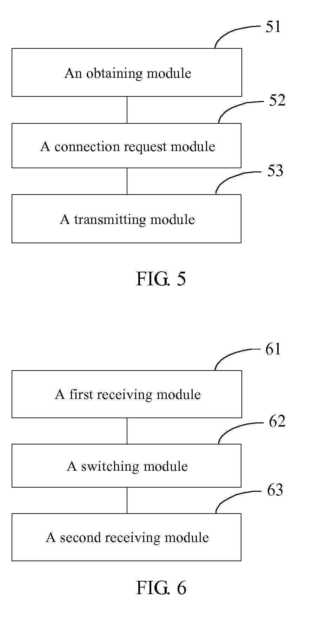

Figure 5 is a structural schematic diagram of a first embodiment of the one-screen sharing device of the present disclosure.

This embodiment includes a multimedia equipment transmitting terminal and a multimedia equipment receiving terminal, the multimedia equipment transmitting terminal includes a first WiHD chip having a transmitting function and the multimedia equipment receiving terminal includes a second WiHD chip having a receiving function.

The one-screen sharing device, on the multimedia equipment transmitting terminal side, includes:
an obtaining module 51, configured to obtain image data of a display interface of the multimedia equipment transmitting terminal when an instruction of sharing the display interface to the multimedia equipment receiving terminal is received.
a connection request module 52, configured to send a request of establishing a connection to the second WiHD chip through the first WiHD chip to establish a communication connection based on the WiHD chip between the multimedia equipment transmitting terminal and the multimedia equipment receiving terminal.
a transmitting module 53, configured to transmit the image data to the multimedia equipment receiving terminal through the communication connection based on the WiHD chip, so that the multimedia equipment receiving terminal displays synchronously according to the received image data to realize one-screen sharing between the multimedia equipment transmitting terminal and the multimedia equipment receiving terminal.

The one-screen sharing device may further include a first determination module configured to determine whether the display interface is a static interface.

If the determination result of the first determination module is yes, then the obtaining module 51 can be configured to obtain the image data of the display interface once.

If the determination result of the first determination module is no, then the obtaining module 51 can also be specifically configured to obtain the image data of the display interface in real time.

Preferably, the one-screen sharing device may also include a second determination module configured to determine whether the file corresponding to the display interface includes audio data.

If the determination result of the second determination module is yes, then the obtaining module 51 is still configured to extract the audio data in real time and transmit the audio data to the multimedia equipment receiving terminal through the communication connection based on the WiHD chips, so that the multimedia equipment receiving terminal plays synchronously according to the received audio data.

Furthermore, referring to FIG. 6, it is a structural schematic diagram of a second embodiment of the one-screen sharing device of the present disclosure.

In this embodiment, the one-screen sharing device includes a multimedia equipment transmitting terminal and a multimedia equipment receiving terminal, the multimedia equipment transmitting terminal includes a first WiHD chip having a transmitting function, the multimedia equipment receiving terminal includes a second WiHD chip having a receiving function, and the multimedia equipment receiving terminal is provided with a first HDMI.

The one-screen sharing device, on the multimedia equipment receiving terminal side, includes:
a first receiving module 61, configured to receive a request of establishing a connection sent by the first WiHD chip through the second WiHD chip, to establish a communication connection based on the WiHD chips between the multimedia equipment transmitting terminal and the multimedia equipment receiving terminal.
a switching module 62, configured to switch the input source of the multimedia equipment receiving terminal to the first HDMI.
a second receiving module 63, configured to receive the image data transmitted from the multimedia equipment transmitting terminal and display synchronously through the communication connection based on the WiHD chips, to realize one-screen sharing between the multimedia equipment transmitting terminal and the multimedia equipment receiving terminal.

Preferably, the one-screen sharing device, on the multimedia equipment receiving terminal side, further includes:

a third receiving module, configured to receive audio data transmitted from the multimedia equipment transmitting terminal through the communication connection based on the WiHD chips and play synchronously.

Wherein the switching module 62 can also be configured to:
set the input source of the multimedia equipment receiving terminal as the first HDMI when a request of setting the input source of the multimedia equipment receiving terminal is received.

In the embodiments of the one-screen sharing device provided by the present disclosure, the multimedia equipment transmitting terminal is provided with a WiHD chip having a transmitting function and the multimedia equipment receiving terminal is provided with a WiHD chip having a receiving function to realize the communication connection based on the WiHD chips between the multimedia equipment transmitting terminal and the multimedia equipment receiving terminal. By obtaining the image of the display interface of the multimedia equipment transmitting terminal and transmitting it to the multimedia equipment receiving terminal through the above-mentioned communication connection, the multimedia equipment receiving terminal can synchronously displays the contents displayed on the multimedia equipment transmitting terminal. As thus, one-screen sharing between the multimedia equipment transmitting terminal and the multimedia equipment receiving terminal is realized without installing any one-screen sharing application. The operations are simple, which makes users operate more efficiently. Furthermore, since the communication connection between the multimedia equipment transmitting terminal and the multimedia equipment receiving terminal is based on the WiHD chips, the data transmission rate and transmission quality are higher and the transmission process is more stable, so that there is no delay in the one-screen sharing process, the image quality is good and more stable, and user's viewing experience can be improved. In addition, in cases where an audio or video file is being played on the multimedia equipment transmitting terminal, the audio data can also be extracted in real time and transmitted to the multimedia equipment receiving terminal to be displayed by the multimedia equipment receiving terminal, thus further improving user's listening experience.

Further, embodiments of the one-screen sharing system are also provided corresponding to the above embodiments of the one-screen sharing method and device of the present disclosure. Detailed description will be given in with reference to the accompanying drawings.

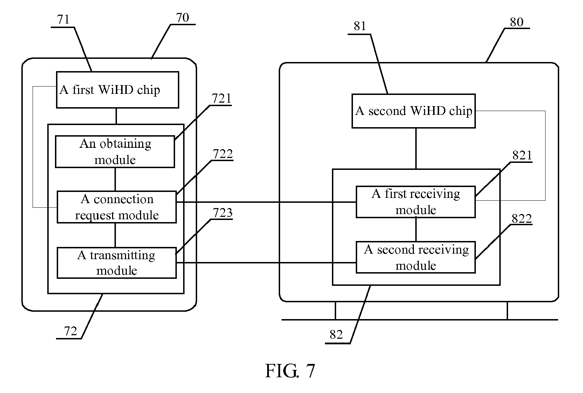

FIG. 7 is a structural schematic diagram of a first embodiment of the one-screen sharing system of the application.

The one-screen sharing system includes a multimedia equipment transmitting terminal 70 and a multimedia equipment receiving terminal 80. In this embodiment, the multimedia equipment transmitting terminal 70 can be a mobile phone, and the multimedia equipment receiving terminal 80 can be a smart TV.

The multimedia equipment transmitting terminal 70 includes a first WiHD chip 71 having a transmitting function and a first data processor 72, and the first WiHD chip 71 and the first data processor 72 are in communication connection.

The multimedia equipment receiving terminal 80 includes a second WiHD chip 81 having a receiving function and a second data processor 82, and the second WiHD chip 81 and the second data processor 82 are in communication connection.

Wherein when the multimedia equipment transmitting terminal 70 receives an instruction of sharing the display interface to the multimedia equipment receiving terminal 80, an obtaining module 721 in the first data processor 72 obtains image data of the display interface. Once a connection request module 722 in the first data processor 72 sends a request of establishing a communication connection based on the first WiHD chip and the second WiHD chip to a first receiving module 821 in the second processor 82, and the communication connection is established, a transmitting module 723 in the first data processor 72 transmits the image data to the multimedia equipment receiving terminal 80, and a second receiving module 822 in the second processing module 82 receives the image data transmitted from the multimedia equipment transmitting terminal 70 and displays synchronously. Preferably, the multimedia equipment receiving terminal 80 may also include a first HDMI, and the second data processor 82 and the first HDMI are in communication connection.

Furthermore, the second processing module 82 may also include a switching module configured to switch the input source of the multimedia equipment receiving terminal 80 to the first HDMI to receive the image data transmitted from the multimedia equipment transmitting terminal 70 through the first HDMI, and display the image data synchronously.

The embodiment of the one-screen sharing system provided by the present disclosure includes a multimedia equipment transmitting terminal and a multimedia equipment receiving terminal. The multimedia equipment transmitting terminal is provided with a WiHD chip having a transmitting function and a first data processor and the multimedia equipment receiving terminal is provided with a WiHD chip having a receiving function and a second data processor, to realize a communication connection based on the WiHD chips between the multimedia equipment transmitting terminal and the multimedia equipment receiving terminal. Furthermore, by obtaining the image of the display interface of the multimedia equipment transmitting terminal and transmitting it to the multimedia equipment receiving terminal through the above-mentioned communication connection, the multimedia equipment receiving terminal synchronously displays the contents displayed on the multimedia equipment transmitting terminal. As thus, one-screen sharing between the multimedia equipment transmitting terminal and the multimedia equipment receiving terminal is realized without installing any one-screen sharing application. The operations are simple, which allows users to operate more efficiently. Furthermore, since the communication connection between the multimedia equipment transmitting terminal and the multimedia equipment receiving terminal is based on the WiHD chips, the data transmission rate and transmission quality are higher and the transmission process is more stable, so that there is no delay in the one-screen sharing process, the image quality is good and more stable, and user's viewing experience can be improved. In addition, in cases where an audio or video file is being played on the multimedia equipment transmitting terminal, the audio data can also be extracted in real time and transmitted to the multimedia equipment receiving terminal to be played by the multimedia equipment receiving terminal, thus further improving user's listening experience. Each embodiment in this specification is described in a progressive way, and focuses on differences from other embodiments. For the similar parts between embodiments, the contents in each embodiment can be referred to each other. For the embodiments of the device and system, the description is simple as they are basically similar to the embodiments of the method, and the related parts can be referred to the partial description of the embodiments of the method.

The present disclosure also discloses a computer readable recording medium, where a program used to implement the above method is recorded.

Anyone skill in the art will appreciate that: all or part of the steps of the above embodiments of the method can be conducted by hardware related to the program instruction, the program previously described may be stored in a computer-readable storage medium, and when the program is executed, the steps of the above embodiments of the method are executed; while the above storage medium previously described includes: ROM, RAM, diskette or disc and other medium that can store program code.

Finally, it should be noted that the foregoing embodiments are merely illustrative of technical solutions of the present disclosure without limitation; although the present disclosure is illustrated in detail with reference to the above embodiments, those ordinarily skilled in the art will appreciate that modifications may be made on the technical solutions cited by the above embodiments, or equivalent substitutions may be made on partial technical features; moreover, these modifications or substitutions will not make the essential of corresponding technical solutions depart from the spirit and scope of the technical solutions in respective embodiments of the present disclosure.

## Claims

1. A one-screen sharing method, **characterized in that**, comprises a multimedia equipment transmitting terminal and a multimedia equipment receiving terminal, the multimedia equipment transmitting terminal comprises a first wireless high-definition (WiHD) chip having a transmitting function, and the multimedia equipment receiving terminal comprises a second WiHD chip having a receiving function,
on the multimedia equipment transmitting terminal, the method comprises the following steps:
obtaining the image data of a display interface of the multimedia equipment transmitting terminal when an instruction of sharing the display interface to the multimedia equipment receiving terminal is received;
sending a request of establishing a connection through the first WiHD chip to the second WiHD chip to establish a communication connection based on the WiHD chips between the multimedia equipment transmitting terminal and the multimedia equipment receiving terminal; and
transmitting the image data to the multimedia equipment receiving terminal through the communication connection based on the WiHD chips, so that the multimedia equipment receiving terminal displays synchronously according to the received image data to realize one-screen sharing between the multimedia equipment transmitting terminal and the multimedia equipment receiving terminal.

2. The one-screen sharing method according to claim 1, wherein the communication protocol of the first WiHD chip is the same as that of the second WiHD chip.

3. The one-screen sharing method according to claim 2, wherein the obtaining the image data of the display interface is specifically:
obtaining the image data of the display interface in real time.

4. The one-screen sharing method according to claim 3, wherein which further comprises the following steps:
determining whether a file corresponding to the display interface comprises audio data; and
if the determination result is yes, then extracting the audio data in real time and transmitting the audio data through the communication connection based on the WiHD chips to the multimedia equipment receiving terminal, so that the multimedia equipment receiving terminal plays synchronously according to the received audio data.

5. The one-screen sharing method according to claim 1, wherein the first WiHD chip is built in the multimedia equipment transmitting terminal; or
the multimedia equipment transmitting terminal is provided with a first mobile high-definition link (MHL), the first WiHD chip is provided in a transmitter comprising a second MHL, and the first MHL and the second MHL are connected by a first preset data line to realize a connection between the transmitter and the multimedia equipment transmitting terminal.

6. A one-screen sharing method, wherein the method comprises a multimedia equipment transmitting terminal and a multimedia equipment receiving terminal, the multimedia equipment transmitting terminal comprises a first WiHD chip having a transmitting function, the multimedia equipment receiving terminal comprises a second WiHD chip having a receiving function, and the multimedia equipment receiving terminal comprises a first high definition multimedia interface (HDMI),
on the multimedia equipment receiving terminal, the method comprises the following steps:
receiving a request of establishing a connection transmitted from the first WiHD chip through the second WiHD chip to establish a communication connection based on the WiHD chips between the multimedia equipment transmitting terminal and the multimedia equipment receiving terminal;
switching an input source of the multimedia equipment receiving terminal to the first HDMI; and
receiving image data transmitted from the multimedia equipment transmitting terminal through the communication connection based on the WiHD chips, and displaying synchronously, to realize one-screen sharing between the multimedia equipment transmitting terminal and the multimedia equipment receiving terminal.

7. The one-screen sharing method according to claim 6, wherein the method further comprises the following step:
receiving audio data transmitted from the multimedia equipment transmitting terminal through the communication connection based on the WiHD chips, and playing synchronously.

8. The one-screen sharing method according to claim 6, wherein the input source of the multimedia equipment receiving terminal is set as the first HDMI, comprising the following step:
setting the input source of the multimedia equipment receiving terminal as the first HDMI when a request of setting the input source of the multimedia equipment receiving terminal is received.

9. The one-screen sharing method according to claim 6, **characterized in that**, the second WiHD chip is built in the multimedia equipment receiving terminal; or
the second WiHD chip is provided in a receiver comprising a second HDMI, the second HDMI and the first HDMI are connected by a second preset data line to realize a connection between the receiver and the multimedia equipment receiving terminal.

10. A one-screen sharing device, wherein the device comprises a multimedia equipment transmitting terminal and a multimedia equipment receiving terminal, the multimedia equipment transmitting terminal comprises a first WiHD chip having a transmitting function, and the multimedia equipment receiving terminal comprises a second WiHD chip having a receiving function,
on the multimedia equipment transmitting terminal side, the one-screen sharing device comprises:
an obtaining module, configured to obtain image data of a display interface of the multimedia equipment transmitting terminal when an instruction of sharing the display interface to the multimedia equipment receiving terminal is received;
a connection request module, configured to send a request of establishing a connection through the first WiHD chip to the second WiHD chip to establish a communication connection based on the WiHD chips between the multimedia equipment transmitting terminal and the multimedia equipment receiving terminal; and
a transmitting module, configured to transmit the image data to the multimedia equipment receiving terminal through the communication connection based on the WiHD chips, so that the multimedia equipment receiving terminal displays synchronously according to the received image data to realize one-screen sharing between the multimedia equipment transmitting terminal and the multimedia equipment receiving terminal.

11. A one-screen sharing device, wherein the device comprises a multimedia equipment transmitting terminal and a multimedia equipment receiving terminal, the multimedia equipment transmitting terminal comprises a first WiHD chip having a transmitting function, the multimedia equipment receiving terminal comprises a second WiHD chip having a receiving function, and the multimedia equipment receiving terminal is provided with a first HDMI,
on the multimedia equipment receiving terminal side, the one-screen sharing device comprises:
a first receiving module, configured to receive a request of establishing a connection sent by the first WiHD chip through the second WiHD chip to establish a communication connection based on the WiHD chips between the multimedia equipment transmitting terminal and the multimedia equipment receiving terminal;
a switching module, configured to switch a input source of the multimedia equipment receiving terminal to the first HDMI; and
a second receiving module, configured to receive image data transmitted from the multimedia equipment transmitting terminal through the communication connection based on the WiHD chips, and display synchronously, to realize one-screen sharing between the multimedia equipment transmitting terminal and the multimedia equipment receiving terminal.

12. A one-screen sharing system, wherein the system comprises a multimedia equipment transmitting terminal and a multimedia equipment receiving terminal,
the multimedia equipment transmitting terminal comprises a first WiHD chip having a transmitting function and a first data processor, the first WiHD chip and the first data processor are in communication connection;
the multimedia equipment transmitting terminal comprises a seond WiHD chip having a receiving function and a second data processor, and the second WiHD chip and the second data processor are in communication connection; and
wherein when the multimedia equipment transmitting terminal receives an instruction of sharing a display interface to the multimedia equipment receiving terminal, an obtaining module in the first data processor obtains image data of the display interface, once a connection request module in the first data processor sends a request of establishing a communication connection based on the first WiHD chip and the second WiHD chip to a first receiving module in the second processor, a transmitting module in the first data processor transmits the image data to the multimedia equipment receiving terminal, and a second receiving module in a second processing module receives the image data transmitted from the multimedia equipment transmitting terminal, and displays synchronously.

13. The system according to claim 12, wherein the multimedia equipment receiving terminal further comprises a first HDMI, and the second data processor and the first HDMI are in communication connection; and
the second processing module further comprises:
a switching module, configured to switch a input source of the multimedia equipment receiving terminal to the first HDMI to receive the image data transmitted from the multimedia equipment transmitting terminal through the first HDMI, and display synchronously.

14. A computer readable recording medium recorded with a program for executing the method of claim 1 thereon.
